# EUROPEAN PATENT SPECIFICATION

(11) **EP 3 432 188 B1**
(45) Date of publication and mention of the grant of the patent: **23.11.2022**
(21) Application number: 17305949.4
(22) Date of filing: 17.07.2017
(51) Int. Cl.: G06F 21/60

(54) **SECURE PRINT POLICY ENFORCEMENT**
SICHERE DURCHSETZUNG DER DRUCK-POLICY
APPLICATION SÉCURISÉE DE LA POLITIQUE D'IMPRESSION

(43) Date of publication of application: 23.01.2019
(73) Proprietor: Hewlett-Packard Development Company, L.P., Spring TX 77389 (US)
(72) Inventor: SCHIFFMAN, Joshua, Bristol, BSI 6NP (GB); MATHER, Luke, Bristol, Bristol BS8 2PS (GB); BALACHEFF, Boris, 92100 Boulogne-Billancourt (FR)
(74) Representative: Bryers LLP

(56) References cited:
- JP-A- 2004 152 261
- KR-B1- 101 607 622
- US-A1- 2006 015 719
- Arnaud Jumelet ET AL: "Control the health of Windows 10-based devices", , 5 April 2017 (2017-04-05), XP055400355, Retrieved from the Internet: URL:https://docs.microsoft.com/en-us/windo ws/device-security/protect-high-value-asse ts-by-controlling-the-health-of-windows-10 -based-devices [retrieved on 2017-08-22]

## Description

### BACKGROUND

Sensitive data can be protected from being printed in an unauthorised manner based on enforcement of a secure print policy that enables a security protocol to be followed. Some services, such as pull-print for example, may be configured by an administrator to use transport layer security (TLS) with known and verified printer certificates to provide some assurance that a user is printing to a printer identified by a company's IT policies. Tools can be provided that allow IT security management to monitor endpoints for non-compliant incidents and anomalies to allow security breaches to be identified quickly. It is also possible to perform print job routing in a distributed printing environment, where print job destination rules associate print job destinations with a security level to allow print jobs to be associated with a print job destination if security requirements are met. JP2004152261A aims to provide a document print program preventing leakage of a document due to printing, a document protection program, and a document protection system. The document protection system is constituted of the document print program, which has a means acquiring a decoding key of an encrypted document file, a means decoding the document file on the basis of the acquired decoding key, a means acquiring a print requirement related to the document file from a server via a network, and a means executing print processing satisfying the acquired print requirement, and the document protection program protecting the document file. In "Control the health of Windows 10-based devices", Arnaud Jumelet et al there is described an end-to-end solution for protecting high-value assets by enforcing, controlling and reporting the health of Windows 10-based devices such as a mobile device. An identity provider may elect to verify the security compliance of the mobile device before access is granted. The user's device is able to prove its health status that can be sent at any time or when mobile device management (MDM) requests it.

### BRIEF DESCRIPTION OF THE DRAWINGS

Various features of certain examples will be apparent from the detailed description which follows, taken in conjunction with the accompanying drawings, which together illustrate, by way of example only, a number of features, and wherein:
Figure 1 is a flow chart of a method for enforcing a secure print policy according to an example;
Figure 2 is a schematic of an instance of a secure print policy according to an example;
Figure 3 is a schematic of an associated policy for a print job according to an example; and
Figure 4 is a schematic of a production device according to an example.

### DETAILED DESCRIPTION

The present invention is defined by the appended independent claims. In the following description, for purposes of explanation, numerous specific details of certain examples are set forth. Reference in the specification to "an example" or similar language means that a particular feature, structure, or characteristic described in connection with the example is included in at least that one example, but not necessarily in other examples.

There is disclosed a method for enforcing a secure print policy by cryptographically binding the security policy to a rendering or print job. The job can be released to a rendering apparatus, such as a 2D or 3D printer for example, once a remote attestation protocol has been used to verify the security properties of the printer (or an intermediary device).

According to an example, a security policy is associated with a print job and the release of the print job occurs when the policy has been satisfied by verifying security properties of the printer or an intermediary device. The security policy can be cryptographically bound to the print job to ensure that it cannot be modified without detection. The security policy can be used in conjunction with a remote attestation protocol to verify security properties of the printer or the intermediary device before passing sensitive information to the printer or the intermediary device.

According to an example, a security policy can be instantiated and associated with a print job instance. Devices participating in a printing workflow can verify that a targeted printer satisfies the policy before allowing the document to be sent to the printer. This includes verification of the printer's integrity (attestation) and that the printer possesses a known public key or group public key based on the policy. Other aspects can also be checked, such as printer functionality, location, or other context.

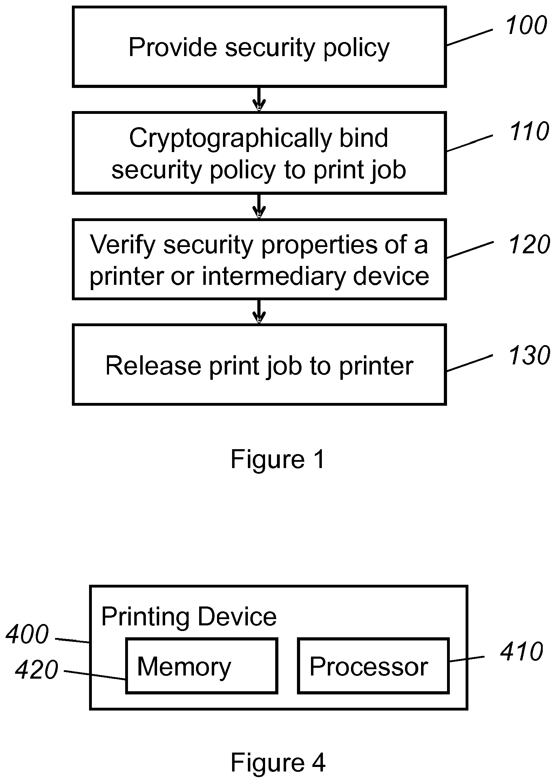

Figure 1 shows a flow chart of a method for enforcing a secure print policy according to an example. When a user initiates a print job, an instance of a security policy is created at block 100.

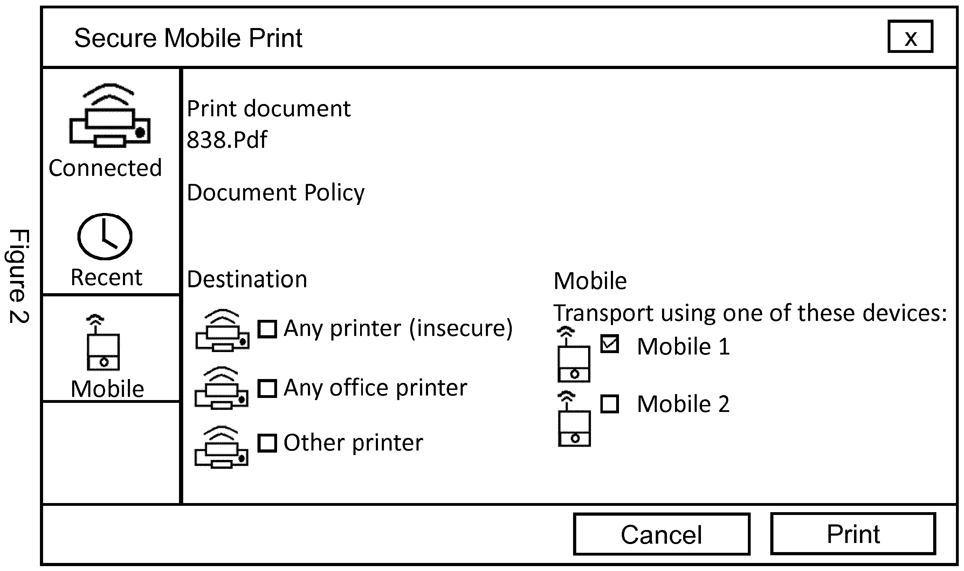

Figure 2 shows a schematic of an instance of a secure print policy according to an example. When a print job is created the security policy is instantiated and, if the route, destination server or printer is known, cryptographically bound to the print job. This bundle can be sent over an infrastructure or peer-to-peer link to the printer or intermediary device. When the policy specifies remote attestation to be run against the printer or intermediary device, the policy instance is sent to the device that performs the attestation.

A security policy can comprise of one or more of the following nonexhaustive list of properties: whether a printer is to have full-disk encryption turned on; a specific set of printers that the document is to be printed at (e.g. any printer, Printer A and Printer B, or any office Y printer); whether the print job can be retained after use; whether a printer is to have a specific operating system version installed; an expiry date on the print job after which it is to be destroyed if it is not released; and whether a print job can be transported on a bring-your-own-device (BYOD) or mobile device. These properties can be pred-defined and/or user configurable.

In an example, a policy can be used to enforce a number of properties about a printer including administrator defined values (name, location and so on), properties of the identity (e.g. expiration), and configuration of the printer (software, settings, hardware components).

Referring back to figure 1, the security policy is associated with a print job or print document at block 110 by cryptographically binding the security policy to the print job or print document.

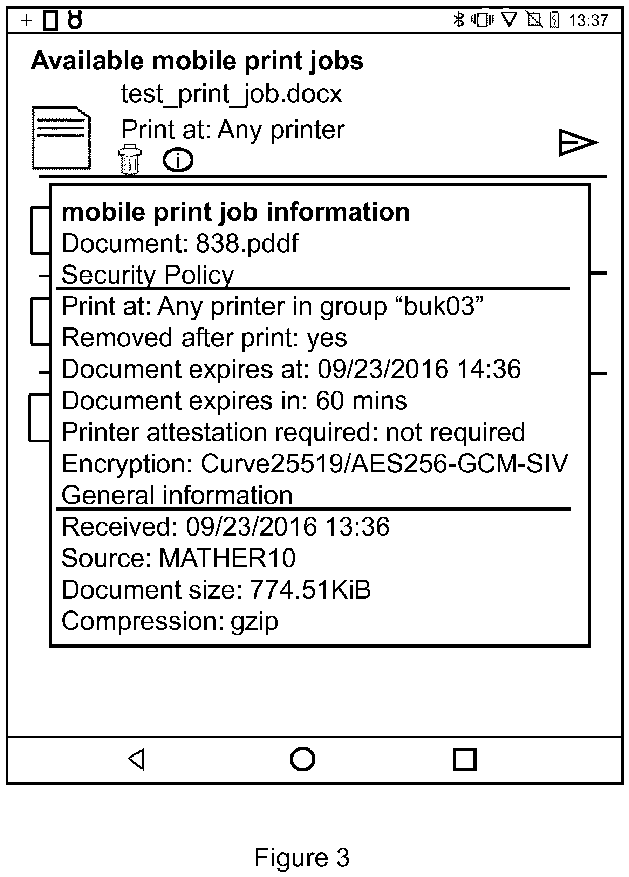

In this connection, figure 3 shows an example of an associated security policy for a print job according to an example. In an example, if a workstation shares a symmetric key with a printer or print server, or if a workstation has the public key of any intermediary hops, the policy can be integrity protected and encrypted along with the print job before transportation to the printer or intermediary device. This binds the policy instance with the job instance, ensuring that the policy cannot be modified without detection by an honest participant. Similarly, a workstation that knows specific printer public keys or group keys for classes of printers (e.g. Office printers, printers on the third floor) can encrypt jobs for just those groups of printers.

In an example, the key can be shared using an authenticated encryption scheme. For example, a symmetric key can be encrypted with the public key of the intended printer to ensure only it can receive the symmetric key.

In an example, before the print job is provided to the printer or intermediary device, a device such as a mobile phone can verify that the targeted printer satisfies the security policy at block 120. In an example, if the print job goes directly to the printer, the user's workstation can verify that the printer satisfies the policy. In an example, if the print job is encrypted under a user key or sent using a mobile device, the user's mobile device can verify the policy once the printer is selected. In an example, if the print job is sent to a pull-print server, the server can check the policy. To verify the policy, the verifying device can ask the printer to perform a remote attestation to verify the printer's configuration as recorded in the measurement log. The policy can also be sent to the verified printer to ensure it handles the print job according to its criteria (e.g. does not retain the document after printing).

In an example, a print job is encrypted such that it is released when a user enters or otherwise provides a decryption PIN at or to a printer. Therefore, the job is released to the specific printer, but it does not tell the user anything about the integrity of the printer. Provided that the security properties and/or security policy have been verified, the print job or print document can be released to the printer or intermediary device at block 130. The policy is then selectable by the user at print time (from a print driver for example). This enables use cases to provide customers high assurance that print jobs are delivered to printers meeting specific requirements. For example, a job can be created that can be printed by printers in a secure location as defined by a privileged group key provided to such printers. For example, this covers scenarios where a user is in a public location like a hotel and wants to ensure print jobs are only released to printers with known configurations and security protection.

The methods described improve the security of a printing workflow and are of value to organizations such as law firms and financial institutions that manage highly confidential documents. Electronic documents vary in the degrees of protection that need to be afforded to them. This extends into the printing domain. The methods described make it possible to define a security policy for a print job and be given assurance that the policy can and has been adhered to during the printing process. In an example, print jobs can be sent from a PC or mobile device over an unencrypted channel to the printer, or transport security like transport layer security (TLS) can be used.

In an example, since the identity of the endpoint is known, the integrity of the printer endpoint can be expressed in the security policy connection. This provides support for embedding integrity statements in TLS certificates and enhances its value and effectiveness. As such, the methods described add assurance that a pre-defined security policy has been adhered to and that the policy itself has not been modified. This makes enforcing security policies for print jobs much easier because a workstation issuing a print job has knowledge of how a target printer is secured or configured. For example, when printers have a certificate installed to enable TLS protocols for transport security, the user can tell how the target printer has been configured and if it is a valid printer, given a security policy that specifies which printers to use.

The methods described also remove the need for all printers to be maintained by a central authority and gives the user the control or assurance that the authority has performed checks. For example, services like pull-print may be configured by an administrator to use TLS with known and verified printer certificates and using the pull print service provides some guarantees that the user is printing to a printer identified by the enterprise IT policies.

Examples in the present disclosure can be provided as methods, systems or machine-readable instructions. Such machine-readable instructions may be included on a computer readable storage medium (including but not limited to disc storage, CD-ROM, optical storage, etc.) having computer readable program codes therein or thereon.

The present disclosure is described with reference to flow charts and/or block diagrams of the method, devices and systems according to examples of the present disclosure. Although the flow diagrams described above show a specific order of execution, the order of execution may differ from that which is depicted. Blocks described in relation to one flow chart may be combined with those of another flow chart. In some examples, some blocks of the flow diagrams may not be necessary and/or additional blocks may be added. It shall be understood that each flow and/or block in the flow charts and/or block diagrams, as well as combinations of the flows and/or diagrams in the flow charts and/or block diagrams can be realized by machine readable instructions.

The machine-readable instructions may, for example, be executed by a general-purpose computer, a special purpose computer, an embedded processor or processors of other programmable data processing devices to realize the functions described in the description and diagrams. In particular, a processor or processing apparatus may execute the machine-readable instructions. Thus, modules of apparatus may be implemented by a processor executing machine readable instructions stored in a memory, or a processor operating in accordance with instructions embedded in logic circuitry. The term 'processor' is to be interpreted broadly to include a CPU, processing unit, ASIC, logic unit, or programmable gate set etc. The methods and modules may all be performed by a single processor or divided amongst several processors.

Such machine-readable instructions may also be stored in a computer readable storage that can guide the computer or other programmable data processing devices to operate in a specific mode.

For example, the instructions may be provided on a non-transitory computer readable storage medium encoded with instructions, executable by a processor. Figure 4 shows an example of a rendering apparatus in the form of a printing device 400 comprising a processor 410 associated with a memory 420. The memory 420 comprises computer readable instructions 100-130 which are executable by the processor 410. For example, the method shown in Figure 1 may be incorporated as computer readable instructions 100-130 that are executable by the processor 410. The instructions 100-130 comprise: Instruction 100 to provide a security policy, instruction 110 to cryptographically bind the security policy to a print job, instruction 120 to verify security properties of a printer or intermediary device, and instruction 130 to release the print job to the printer or intermediary device.

Such machine-readable instructions may also be loaded onto a computer or other programmable data processing devices, so that the computer or other programmable data processing devices perform a series of operations to produce computer-implemented processing, thus the instructions executed on the computer or other programmable devices provide a operation for realizing functions specified by flow(s) in the flow charts and/or block(s) in the block diagrams.

Further, the teachings herein may be implemented in the form of a computer software product, the computer software product being stored in a storage medium and comprising a plurality of instructions for making a computer device implement the methods recited in the examples of the present disclosure.

While the method, apparatus and related aspects have been described with reference to certain examples, various modifications, changes, omissions, and substitutions can be made. In particular, a feature or block from one example may be combined with or substituted by a feature/block of another example.

The word "comprising" does not exclude the presence of elements other than those listed in a claim, "a" or "an" does not exclude a plurality, and a single processor or other unit may fulfil the functions of several units recited in the claims.

The features of any dependent claim may be combined with the features of any of the independent claims or other dependent claims.

## Claims

1. A method for enforcing a secure print policy, the method comprising:
providing (100) a security policy;
cryptographically binding (110) the security policy to a print job to generate a secure print job;
verifying (120) security properties of a printer using the security policy and a remote attestation protocol; and
provided the security properties are verified, releasing (130) the print job to the printer.

2. A method as claimed in claim 1, wherein providing (100) the security policy is performed when a user initiates the print job.

3. A method as claimed in claim 1, wherein the security policy comprises one or more properties that must be satisfied in order to verify (120) the security policy.

4. A method as claimed in claim 3, wherein the properties are comprised of one or more of: whether the printer or an intermediary device has full-disk encryption turned on; a specific set of printers or intermediary devices that the print job are to be printed at; whether the print job can be retained after use; whether the printer or an intermediary device have specific operating system versions installed; an expiry date on the print job after which it is to be destroyed if it is not released; and whether the print job can be transported on a bring-your-own-device or mobile device.

5. A method as claimed in claim 1, wherein a workstation shares a symmetric key with the printer or an intermediary device or a server thereof to protect the integrity of the security policy.

6. A method as claimed in claim 1, wherein the secure print job is encrypted before transportation to the printer or an intermediary device.

7. A method as claimed in claim 1, wherein a bring-your-own-device or mobile device verifies the security properties.

8. A method as claimed in claim 1, wherein the security policy is sent to a device performing the remote attestation protocol.

9. A system for enforcing a secure print policy, the system comprising:
a server configured to,
provide (100) a security policy;
cryptographically bind (110) the security policy to a print job to generate a secure print job;
verify (120) security properties of a printer using the security policy and a remote attestation protocol; and
provided the security properties are verified, release (130) the print job to the printer.

10. A production device (400) for enforcing a secure print policy, the production device comprising:
a processor (410) configured to,
receive a security policy;
receive a secure print job having a security policy that is cryptographically bound to the print job;
receive a remote attestation protocol;
verify security properties of a printer using the security policy and a remote attestation protocol; and
provided the security properties are verified, produce the print job at the production device.

11. A production device (400) as claimed in claim 10, wherein the production device is a three-dimensional printer.

12. A non-transitory machine-readable storage medium encoded with instructions executable by a processor, the machine-readable storage medium comprising:
instructions to:
(i) provide (100) a security policy;
(ii) cryptographically bind (110) the security policy to a print job to generate a secure print job;
(iii) verify (120) security properties of a printer using the security policy and a remote attestation protocol; and
(iv) provided the security properties are verified, release the print job to the printer.

13. A non-transitory machine-readable storage medium encoded with instructions executable by a processor as claimed in claim 12, further comprising instructions to:
provide (100) the security policy when a user initiates the print job.

14. A non-transitory machine-readable storage medium encoded with instructions executable by a processor as claimed in claim 12, further comprising instructions to:
encrypt (110) the secure print job prior to transportation to the printer or an intermediary device.

15. A non-transitory machine-readable storage medium encoded with instructions executable by a processor as claimed in claim 12, further comprising instructions to:
transmit the security policy to a device performing the remote attestation protocol.

## Patentansprüche

1. Verfahren zum Durchsetzen einer Richtlinie für sicheres Drucken, wobei das Verfahren umfasst:
Bereitstellen (100) einer Sicherheitsrichtlinie;
kryptographisches Binden (110) der Sicherheitsrichtlinie an einen Druckauftrag, um einen sicheren Druckauftrag zu erzeugen;
Verifizieren (120) von Sicherheitseigenschaften eines Druckers unter Verwendung der Sicherheitsrichtlinie und eines Remote-Attestierungsprotokolls; und
vorausgesetzt, die Sicherheitseigenschaften werden verifiziert, Freigeben (130) des Druckauftrags an den Drucker.

2. Verfahren nach Anspruch 1, wobei das Bereitstellen (100) der Sicherheitsrichtlinie durchgeführt wird, wenn ein Benutzer den Druckauftrag einleitet.

3. Verfahren nach Anspruch 1, wobei die Sicherheitsrichtlinie eine oder mehrere Eigenschaften umfasst, die erfüllt sein müssen, um die Sicherheitsrichtlinie zu verifizieren (120).

4. Verfahren nach Anspruch 3, wobei die Eigenschaften aus einem oder mehreren der Folgenden bestehen: ob der Drucker oder eine zwischengeschaltete Vorrichtung eine Festplattenverschlüsselung aktiviert hat; einem spezifischen Satz von Druckern oder zwischengeschalteten Vorrichtungen, auf denen der Druckauftrag zu drucken ist; ob der Druckauftrag nach der Verwendung beibehalten werden kann; ob auf dem Drucker oder einer zwischengeschalteten Vorrichtung spezifische Betriebssystemversionen installiert sind; einem Ablaufdatum des Druckauftrags, nach dem er zu zerstören ist, falls er nicht freigegeben wird; und ob der Druckauftrag auf einem Bring-Your-Own-Device oder einer Mobilvorrichtung transportiert werden kann.

5. Verfahren nach Anspruch 1, wobei eine Arbeitsstation einen symmetrischen Schlüssel mit dem Drucker oder einer zwischengeschalteten Vorrichtung oder einem Server davon teilt, um die Integrität der Sicherheitsrichtlinie zu schützen.

6. Verfahren nach Anspruch 1, wobei der sichere Druckauftrag vor dem Transport zu dem Drucker oder einer zwischengeschalteten Vorrichtung verschlüsselt wird.

7. Verfahren nach Anspruch 1, wobei ein Bring-Your-Own-Device oder eine Mobilvorrichtung die Sicherheitseigenschaften verifiziert.

8. Verfahren nach Anspruch 1, wobei die Sicherheitsrichtlinie an eine Vorrichtung gesendet wird, die das Remote-Attestierungsprotokoll durchführt.

9. System zum Durchsetzen einer Richtlinie für sicheres Drucken, wobei das System umfasst:
einen Server, der konfiguriert ist zum,
Bereitstellen (100) einer Sicherheitsrichtlinie;
kryptographischen Binden (110) der Sicherheitsrichtlinie an einen Druckauftrag, um einen sicheren Druckauftrag zu erzeugen;
Verifizieren (120) von Sicherheitseigenschaften eines Druckers unter Verwendung der Sicherheitsrichtlinie und eines Remote-Attestierungsprotokolls; und
vorausgesetzt, die Sicherheitseigenschaften werden verifiziert, Freigeben (130) des Druckauftrags an den Drucker.

10. Produktionsvorrichtung (400) zum Durchsetzen einer Richtlinie für sicheres Drucken, wobei die Produktionsvorrichtung umfasst:
einen Prozessor (410), der konfiguriert ist zum,
Empfangen einer Sicherheitsrichtlinie;
Empfangen eines sicheren Druckauftrags, der eine Sicherheitsrichtlinie aufweist, die kryptographisch an den Druckauftrag gebunden ist;
Empfangen eines Remote-Attestierungsprotokolls;
Verifizieren von Sicherheitseigenschaften eines Druckers unter Verwendung der Sicherheitsrichtlinie und eines Remote-Attestierungsprotokolls; und
vorausgesetzt, die Sicherheitseigenschaften werden verifiziert, Erzeugen des Druckauftrags an der Produktionsvorrichtung.

11. Produktionsvorrichtung (400) nach Anspruch 10, wobei die Produktionsvorrichtung ein dreidimensionaler Drucker ist.

12. Nicht flüchtiges maschinenlesbares Speichermedium, das mit Anweisungen codiert ist, die durch einen Prozessor ausführbar sind, wobei das maschinenlesbare Speichermedium umfasst:
Anweisungen für Folgendes:
i) Bereitstellen (100) einer Sicherheitsrichtlinie;
ii) kryptographisches Binden (110) der Sicherheitsrichtlinie an einen Druckauftrag, um einen sicheren Druckauftrag zu erzeugen;
iii) Verifizieren (120) von Sicherheitseigenschaften eines Druckers unter Verwendung der Sicherheitsrichtlinie und eines Remote-Attestierungsprotokolls; und
iv) vorausgesetzt, die Sicherheitseigenschaften werden verifiziert, Freigeben des Druckauftrags an den Drucker.

13. Nicht flüchtiges maschinenlesbares Speichermedium, das mit Anweisungen codiert ist, die durch einen Prozessor ausführbar sind, nach Anspruch 12, das ferner Anweisungen umfasst zum:
Bereitstellen (100) der Sicherheitsrichtlinie, wenn ein Benutzer den Druckauftrag einleitet.

14. Nicht flüchtiges maschinenlesbares Speichermedium, das mit Anweisungen codiert ist, die durch einen Prozessor ausführbar sind, nach Anspruch 12, das ferner Anweisungen umfasst zum:
Verschlüsseln (110) des sicheren Druckauftrags vor dem Transport zu dem Drucker oder einer zwischengeschalteten Vorrichtung.

15. Nicht flüchtiges maschinenlesbares Speichermedium, das mit Anweisungen codiert ist, die durch einen Prozessor ausführbar sind, nach Anspruch 12, das ferner Anweisungen umfasst zum:
Übertragen der Sicherheitsrichtlinie an eine Vorrichtung, die das Remote-Attestierungsprotokoll durchführt.

## Revendications

1. Procédé permettant d'appliquer une politique d'impression sécurisée, le procédé comprenant :
la fourniture (100) d'une politique de sécurité ;
la liaison de manière cryptographique (110) de la politique de sécurité à un travail d'impression pour générer un travail d'impression sécurisé ;
la vérification (120) de propriétés de sécurité d'une imprimante à l'aide de la politique de sécurité et d'un protocole d'attestation à distance ; et
à condition que les propriétés de sécurité soient vérifiées, la libération (130) du travail d'impression vers l'imprimante.

2. Procédé selon la revendication 1, dans lequel la fourniture (100) de la politique de sécurité est effectuée lorsqu'un utilisateur lance le travail d'impression.

3. Procédé selon la revendication 1, dans lequel la politique de sécurité comprend une ou plusieurs propriétés qui doivent être satisfaites afin de vérifier (120) la politique de sécurité.

4. Procédé selon la revendication 3, dans lequel les propriétés comprennent : le fait de savoir si l'imprimante ou un dispositif intermédiaire présente un chiffrement complet du disque activé ; et/ou un ensemble spécifique d'imprimantes ou de dispositifs intermédiaires au niveau desquels le travail d'impression doit être imprimé ; et/ou le fait de savoir si le travail d'impression peut être conservé après utilisation ; et/ou le fait de savoir si l'imprimante ou un dispositif intermédiaire présente des versions de système d'exploitation spécifiques installées ; et/ou une date d'expiration du travail d'impression après laquelle il doit être détruit s'il n'est pas libéré ; et/ou le fait de savoir si le travail d'impression peut être transporté sur un dispositif personnel ou un dispositif mobile.

5. Procédé selon la revendication 1, dans lequel un poste de travail partage une clé symétrique avec l'imprimante ou un dispositif intermédiaire ou un serveur de ceux-ci pour protéger l'intégrité de la politique de sécurité.

6. Procédé selon la revendication 1, dans lequel le travail d'impression sécurisé est chiffré avant son transport vers l'imprimante ou un dispositif intermédiaire.

7. Procédé selon la revendication 1, dans lequel un dispositif personnel ou un dispositif mobile vérifie les propriétés de sécurité.

8. Procédé selon la revendication 1, dans lequel la politique de sécurité est envoyée à un dispositif effectuant le protocole d'attestation à distance.

9. Système permettant d'appliquer une politique d'impression sécurisée, le système comprenant :
un serveur configuré pour,
fournir (100) une politique de sécurité ;
lier de manière cryptographique (110) la politique de sécurité à un travail d'impression pour générer un travail d'impression sécurisé ;
vérifier (120) des propriétés de sécurité d'une imprimante à l'aide de la politique de sécurité et d'un protocole d'attestation à distance ; et
à condition que les propriétés de sécurité soient vérifiées, libérer (130) le travail d'impression vers l'imprimante.

10. Dispositif de production (400) permettant d'appliquer une politique d'impression sécurisée, le dispositif de production comprenant :
un processeur (410) configuré pour,
recevoir une politique de sécurité ;
recevoir un travail d'impression sécurisé ayant une politique de sécurité qui est liée de manière cryptographique au travail d'impression ;
recevoir un protocole d'attestation à distance ;
vérifier des propriétés de sécurité d'une imprimante à l'aide de la politique de sécurité et d'un protocole d'attestation à distance ; et
à condition que les propriétés de sécurité soient vérifiées, produire le travail d'impression au niveau du dispositif de production.

11. Dispositif de production (400) selon la revendication 10, dans lequel le dispositif de production est une imprimante tridimensionnelle.

12. Support de stockage non transitoire lisible par machine codé avec des instructions exécutables par un processeur, le support de stockage lisible par machine comprenant :
des instructions pour :
(i) fournir (100) une politique de sécurité ;
(ii) lier de manière cryptographique (110) la politique de sécurité à un travail d'impression pour générer un travail d'impression sécurisé ;
(iii) vérifier (120) des propriétés de sécurité d'une imprimante à l'aide de la politique de sécurité et d'un protocole d'attestation à distance ; et
(iv) à condition que les propriétés de sécurité soient vérifiées, libérer le travail d'impression vers l'imprimante.

13. Support de stockage non transitoire lisible par machine codé avec des instructions exécutables par un processeur selon la revendication 12, comprenant en outre des instructions pour :
fournir (100) la politique de sécurité lorsqu'un utilisateur lance le travail d'impression.

14. Support de stockage non transitoire lisible par machine codé avec des instructions exécutables par un processeur selon la revendication 12, comprenant en outre des instructions pour :
chiffrer (110) le travail d'impression sécurisé avant son transport vers l'imprimante ou un dispositif intermédiaire.

15. Support de stockage non transitoire lisible par machine codé avec des instructions exécutables par un processeur selon la revendication 12, comprenant en outre des instructions pour :
transmettre la politique de sécurité à un dispositif effectuant le protocole d'attestation à distance.
